(19) Europäisches Patentamt
European Patent Office
Office européen des brevets

(11) Numéro de publication : **0 094 071**
**B1**

(12) **FASCICULE DE BREVET EUROPÉEN**

(45) Date de publication du fascicule du brevet : **30.07.86**

(51) Int. Cl.[4] : **A 01 K 67/00**, B 01 J 2/06, A 01 N 63/00, A 23 K 1/18

(21) Numéro de dépôt : **83104524.0**

(22) Date de dépôt : **07.05.83**

(54) **Procédé de fabrication de globules encapsulables.**

(30) Priorité : **12.05.82 FR 8208288**

(43) Date de publication de la demande :
**16.11.83 Bulletin 83/46**

(45) Mention de la délivrance du brevet :
**30.07.86 Bulletin 86/31**

(84) Etats contractants désignés :
**BE CH DE GB IT LI NL**

(56) Documents cités :
**FR-A- 2 078 585**
**FR-A- 2 080 805**
**FR-A- 2 290 246**
**FR-A- 2 460 625**

(73) Titulaire : **Etablissement public dit: INSTITUT NATIONAL DE LA RECHERCHE AGRONOMIQUE**
**149, rue de Grenelle**
**F-75341 Paris Cedex 07 (FR)**

(72) Inventeur : **Bonnot, Guy**
**24 Impasse Ampère**
**F-69660 Collonges au Mont d'Or (Rhône) (FR)**
Inventeur : **Laviolette, Pierre**
**17 rue Frédéric Chopin**
**F-69680 Chassieu (Rhône) (FR)**
Inventeur : **Potiron, André**
**15 Les Nouveaux Horizons Elancourt**
**F-78310 Maurepas (Yvelines) (FR)**
Inventeur : **Deysson, Jean-Yves**
**42 rue Edison**
**F-75013 Paris (Seine) (FR)**

(74) Mandataire : **Simonnot, Bernard et al**
**Cabinet Simonnot 49, Rue de Provence**
**F-75442 Paris Cédex 09 (FR)**

**EP 0 094 071 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un procédé de fabrication de globules encapsulables, applicable notamment à la fabrication de substrats d'élevage de divers types d'insectes entomophages, en particulier d'œufs artificiels de lépidoptères utilisables pour l'élevage en masse de trichogrammes. Le procédé est par ailleurs applicable à tout fractionnement d'un milieu artificiel en unités de petite taille faciles à conserver et à manipuler sans dégradation.

Dans le cas des œufs artificiels de lépidoptères, chaque unité de milieu nutritionnel encapsulé est destinée à permettre, à l'intérieur de la capsule, le développement d'un ou de plusieurs organismes qui y auront été introduits, ou bien de servir d'unité nutritionnelle ou proie à des organismes susceptibles de les exploiter.

Pour une telle application, la réalisation de l'encapsulation est très complexe : d'une part, le milieu doit satisfaire l'ensemble du processus vital du parasite et assurer sa survie, sa nutrition, sa croissance, son organogénèse en fournissant, dans un volume fini, tous les constituants d'un adulte viable et fécond. D'autre part, l'enveloppe de la capsule doit satisfaire à de nombreuses exigences simultanées telles que taille des œufs, épaisseur et consistance de la coque, perméabilité aux gaz, imperméabilité à l'eau, inertie vis-à-vis des constituants du milieu ; elle doit en outre permettre une ovisposition normale.

Compte tenu cependant de la composition des milieux à enrober, qui sont constitués de plusieurs dizaines de composés appropriés dont une partie se présente sous la forme d'une émulsion lipidique particulièrement fragile, l'encapsulation ne peut être effectuée par l'intermédiaire de la coacervation connue dans d'autres domaines, mais par dépôt en phase vapeur d'une substance polymérisable en pellicule mince sur des globules congelés. Du fait cependant de la composition rappelée ci-dessus du milieu à congeler, il était nécessaire de mettre au point un procédé de fabrication adapté à l'obtention de tels globules.

On connaît déjà la fabrication de globules ou de granules sphériques de diverses substances. Par exemple, la demande de brevet français FR-A-2290246 décrit un procédé de transformation d'une masse de produit fluide en billes de faibles dimensions, selon lequel on peut pulvériser le produit par injection dans un liquide frigorigène, mais où il n'y a pas lieu de tenir compte comme dans la présente invention de la fragilité et de la stabilité dudit produit fluide. De la même façon, le brevet français FR-A-2078585 décrit un procédé de granulation d'une matière fondue, selon lequel on coule la matière fondue en jet continu ou en gouttes au sein d'un liquide cryogénique avec un débit réglé de telle sorte que les gouttes prennent la forme sphérique, ledit procédé étant de préférence applicable à une matière peu fragile et à point de fusion très élevé, telle qu'un métal ou un sel métallique. Ces procédés ne pourraient donc pas être directement applicables aux substances à mettre sous forme de globules selon la présente invention.

Celle-ci vise donc un procédé de fabrication de globules destinés à être ensuite encapsulés, applicable à des substances à congeler de nature très variable et pouvant être constituées de solutions organiques et/ou minérales, contenant ou non des particules colloïdales en suspension, aussi bien que d'émulsions de phases non miscibles.

Conformément à l'invention, on pulvérise la substance à congeler par désintégration d'un jet de ladite substance et l'on recueille les gouttes ainsi obtenues sur une grille à alvéoles maintenue à la surface d'un bain de liquide cryogénique ayant une masse spécifique inférieure à celle de ladite substance, et l'on tamise les globules congelés sur au moins un tamis immergé dans le bain au-dessous de ladite grille à alvéoles.

D'autres caractéristiques et avantages de l'invention ressortiront mieux de la description qui va suivre, faite en regard des dessins annexés sur lesquels les figures 1 et 2 représentent des vues schématiques d'appareillage illustrant le procédé de congélation selon l'invention.

Sur ces dessins, les mêmes références désignent les mêmes éléments.

En se référant à la figure 1, le liquide cryogénique avantageux est de l'azote liquide constituant un bain 1 contenu dans un récipient 2. Comme indiqué plus haut, le milieu à congeler présente un temps de congélation relativement long, interdisant par exemple la technique de congélation de gouttes en chute libre dans un gaz froid, ce qui conduirait à une hauteur de chute prohibitive. Selon l'invention, une goutte 3, malgré sa masse spécifique supérieure à celle du bain 1, flotte à la surface du bain par un phénomène de caléfaction. Lorsqu'au contraire, la goutte est congelée en un globule 4, la caléfaction cesse et elle tombe au fond du récipient 2 (en 5) dont on l'extrait par tout moyen approprié connu en soi. On peut, bien entendu remplacer l'azote par tout autre gaz liquéfié convenable.

Lorsque plusieurs gouttes voisines flottent à la surface du même bain, elles ont tendance à se rassembler. Pour éviter cette agglomération, on isole chaque goutte 3 de ses voisines dans un alvéole 6 d'une grille 7 du type nid d'abeille, que l'on maintient à la surface du bain 1 au moyen d'un flotteur 8.

En se référant à la figure 2, la substance à congeler s'écoule à partir d'une réserve 9 et l'on pulvérise le jet 10 au moyen d'une buse pneumatique 11. Bien entendu, le jet 10 est issu d'un orifice calibré 12 dont le diamètre est fonction de la dimension de globule souhaitée. Par exemple, dans le cas d'œufs artificiels de lépidoptères, le diamètre des globules peut être compris entre 0,3 et 1,5 mm suivant les espèces.

On imprime en outre une rotation au bain 1 par l'intermédiaire d'un moteur 13. La rotation du bain, associée à la dispersion pneumatique du jet 10 permettent d'éviter que deux gouttes 3 tombent dans le

même alvéole 6 pendant la congélation. Comme indiqué plus haut, on tamise les globules congelés 4 pendant leur chute dans le bain 1 sur au moins un tamis convenablement calibré 14, 15, immergé dans le bain au-dessous de la grille à alvéoles 7.

L'encapsulation des globules congelés obtenus au moyen du procédé tel que décrit ci-dessus est effectuée de manière connue en soi par polymérisation in situ, sous vide et à basse température, d'un monomère obtenu par exemple à partir du diparaxylylène ou 2-2-paracyclophane, après sublimation et pyrolyse de ce composé par passage dans des fours successifs appropriés. On introduit les globules dans l'enceinte de dépôt par un sas, lui-même maintenu à basse température, et on les dépose de préférence dans un récipient vibrant afin d'éviter le collage des glaçons sur les parois.

On peut mettre en œuvre un composé d'encapsulation résultant par exemple du procédé d'obtention qui sera décrit ci-après et consistant essentiellement, à partir du dichloro α,α'-paraxylène, à former le dimercaptométhyl 1,4 benzène, à condenser ce dernier avec le dichloro α,α'-paraxylène, puis à effectuer une désulfuration photochimique du produit de condensation en présence de triéthylphosphite.

Les exemples suivants, donnés à titre explicatif mais nullement limitatif, donnent le détail de réaction utiles pour la préparation du 2,2-paracyclophane d'encapsulation, ainsi que l'illustration du procédé selon l'invention à l'obtention de globules de composition et de destination diverses.

Exemple I

Rappel de la synthèse du 2,2-paracyclophane :

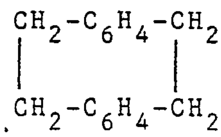

(tricyclo 8,2,2,2,4,7 hexadéca 4,6,10,12,13,15 hexaène).

La matière première est le dichloro α,α'-paraxylène qui est un produit commercialisé.

Les différentes étapes de la synthèse sont les suivantes :

1) Synthèse du dimercapto-méthyl-1,4 benzène :

$$Cl—CH_2—C_6H_4—CH_2Cl + S{=}C\ (NH_2)_2 \xrightarrow[2°/H^+]{1°/OH} SH—CH_2—C_6H_4—CH_2—SH$$

2) Condensation du dimercapto-méthyl-1,4 benzène avec le α,α' dichloro paraxylène en milieu dilué et en présence de soude.

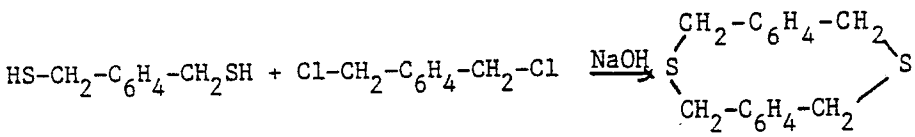


3) Désulfuration photochimique en présence de triéthylphosphite

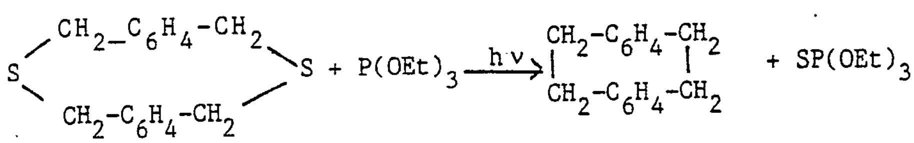


Mode opératoire

Etape 1

A une solution de α,α' dichloro paraxylène (87,5 g-0,5 mole) dans l'isopropanol (350 ml) on ajoute en agitant une solution de thiourée (95 g-1,25 mole) dans l'eau (150 ml). On porte ensuite à reflux, toujours en agitant, pendant 30 minutes. Après refroidissement, on verse 125 ml d'ammoniac à 21 %, on chauffe à nouveau 30 min à reflux et l'on acidifie avec de l'acide chlorhydrique concentré.

La masse cristallisée obtenue est filtrée, lavée à l'eau froide et recristallisée dans 300 ml d'hexane. Poids obtenu : 76 g Rendement : 90 %.

Etape 2

Dans un réacteur de 6 litres, on porte à reflux 4,4 litres d'alcool à 95 %. On verse simultanément avec des vitesses identiques, deux solutions :

10,5 g (60 mmoles) de α,α' dichloro paraxylène dans 500 ml de benzène.

10,2 g (60 mmoles) de para dimercapto-méthyl benzène et 4,8 g de soude dans 500 ml d'alcool à 95 % (il est nécessaire pour obtenir cette solution de dissoudre la soude dans le minimum d'eau (5 ml)).

La vitesse d'addition doit être faible pour éviter la réaction de condensation intermoléculaire.

Une vitesse de 50 ml/h est préférée. On a opéré avec un débit de 100 ml/h par portions de 100 ml, avec des interruptions entre les additions, les 500 ml étant versés en 8 heures.

Après la fin de l'addition, le reflux est maintenu une nuit (14 heures), puis les solvants sont évaporés (4 à 5 heures). Le résidu est extrait, à chaud, deux fois avec 250 ml de benzène.

Au refroidissement de ces solutions benzéniques, il y a cristallisation du produit que l'on recueille par filtration (8 à 9 grammes).

Le filtrat est ensuite évaporé, le résidu est recristallisé dans le chloroforme (2 g dans 30 $cm^3$). On récupère environ 1 g de produit.

Poids obtenu : 10 g ; rendement 62 %

Point de fusion : 284 °C

RMN ($CDCl_3$) δ = 3,75 ppm (8H) δ = 6,85 ppm (8H).

Etape 3

Pour l'apport d'énergie lumineuse, on utilise une lampe à vapeur de mercure haute pression, de 400 watts.

5 g d'hétérocycle souffré sont mis en suspension dans 500 $cm^3$ de triéthylphosphite par agitation magnétique et un courant d'azote. La durée d'irridiation est de 2 heures, pendant lesquelles une circulation d'eau de refroidissement est nécessaire. Une irradiation trop longue diminue le rendement. Il y a dissolution totale.

On évapore le solvant sous vide léger (20 mm) et l'on termine l'évaporation sous vide plus poussé.

Triéthylphosphite : Eb. = 150 °C à la pression atmosphérique

SP $(OEt)_3$ : $Eb_{20}$ = 106 °C.

On reprend le résidu avec un peu d'acétone (10 ml) et l'on filtre. Le résidu récupéré (3 g) est recristallisé dans le toluène (70 ml). On obtient 2,2 g de produit blanc au point de fusion correct (285 °C), au spectre de RMN également en accord avec la littérature. Mais ce produit contient une impureté fluorescente en UV, qui n'est pas éliminée par sublimation. Son élimination se fait par filtration sur silice.

Une solution de 2 g dans 300 ml de benzène est passée sur une colonne de 2 cm de diamètre remplie avec 15 g de silice. L'impureté ne migre pas. Pour récupérer la totalité du paracyclophane il est nécessaire d'éluer avec 300 ml de benzène.

Pour augmenter les rendements :

la recristallisation dans le toluène est faite après regroupement de plusieurs irradiations.

A partir des résidus de recristallisation dans le toluène et des filtrats de lavage à l'acétone, on peut récupérer du paracyclophane (3 opérations — 0,6 g).

Paracyclophane : P.F. = 285 °C (sublimation)

RMN ($CDCl_3$) δ = 3,15 (8H) δ = 6,60 (8H).

Exemple II

On prépare au moyen du procédé selon l'invention des microglobules de milieu artificiel présentant une composition proche de celle du contenu de l'œuf du lépidoptère Ephestia kuechniella, soit notamment 10 % de protides principalement sous forme protéique et 10 % de lipides en émulsion stabilisée par de la lécithine d'œuf. La substance à congeler dans ce cas est organique et consiste en une émulsion de deux phases non miscibles.

Ces microglobules, destinés après encapsulation dans une pellicule polymérisée convenable, à servir d'hôte ou d'œufs artificiels pour la ponte et le développement de parasites oophages tels que le Trichogramme, ont un diamètre compris entre 0,6 et 1 mm, de façon à limiter un volume voisin de celui des œufs de lépidoptère qui servent d'hôtes habituels.

Exemple III

De la même façon que dans l'exemple II, on prépare des microglobules dans lesquels la substance à congeler ou le milieu encapsulé, connu en soi, est composé de jaune d'œuf de poule (2 volumes), d'hémolymphe d'insecte (3 volumes) et de solution saline (1 volume). Dans ce cas, la substance à congeler comprend une fraction organique et une fraction minérale, avec des substances colloïdales en suspension.

Exemple IV

De la même façon encore, on prépare des microglobules dont la substance à congeler est soit un broyat total de pucerons, soit un milieu artificiel complexe destiné à remplacer ce dernier, et elle peut

comprendre à la fois une fraction organique, une fraction minérale et des colloïdes. Après encapsulation, les microglobules obtenus présentent un diamètre compris entre 1 et 2 mm et ils constituent des proies artificielles ou pucerons artificiels, destinés à l'élevage de prédateurs aphidiphages tels que coccinelles, chrysopes, etc.

**Revendications**

1. Procédé de fabrication de globules qui sont destinés à être ensuite encapsulés au moyen d'une pellicule polymérisée, applicable notamment à la fabrication de substrats d'élevage d'insectes entomophages sous forme d'œufs artificiels de lépidoptères, procédé du type dans lequel on congèle des gouttes (3) dans un bain de liquide cryogénique (1) avant leur encapsulation, lesdites gouttes étant formées par pulvérisation à partir d'un jet (10) de la substance à congeler, procédé caractérisé par le fait qu'on pulvérise ladite substance par désintégration du jet (10) et qu'on recueille les gouttes ainsi obtenues sur une grille (7) à alvéoles maintenue à la surface du bain cryogénique, celui-ci ayant une masse spécifique inférieure à celle de ladite substance, puis que l'on tamise les globules congelés (4, 5) issus des gouttes sur au moins un tamis (14, 15) immergé dans le bain au-dessous de ladite grille à alvéoles.

2. Procédé selon la revendication 1, caractérisé par le fait que le bain de liquide cryogénique est constitué par de l'azote liquide ou tout autre gaz liquéfié.

3. Procédé selon l'une des revendications 1 ou 2, caractérisé par le fait que le jet est issu d'une réserve (9) munie d'un orifice calibré (12) dont le diamètre est fonction de la dimension des globules à obtenir.

4. Procédé selon l'une quelconque des revendications 1 à 3, caractérisé par le fait que l'on pulvérise le jet au moyen d'une buse pneumatique (11) et que l'on met le bain cryogénique en rotation, afin d'éviter l'agglomération des gouttes à congeler.

5. Procédé selon l'une quelconque des revendications 1 à 4, caractérisé par le fait que la substance à congeler est constituée par une solution organique et/ou minérale pouvant contenir des substances colloïdales en suspension ou bien par une émulsion de deux phases non miscibles.

6. Procédé selon l'une quelconque des revendications 1 à 5, caractérisé par le fait que la pellicule polymérisée in situ est constituée par du 2,2-paracyclophane.

**Claims**

1. Method of manufacturing globules which are intended to be then encapsulated by means of a polyermized film, applicable more particularly to the manufacture of substrates for breeding entomophagous insects in the form of artificial lepidopterous eggs, method of a type in which drops (3) are frozen in a liquid cryogenic bath (1) before they are encapsulated, said drops being formed by spraying from a jet (10) of the substance to be frozen, which method is characterized by the fact that said substance is sprayed by disintegration of the jet (10) and the drops thus obtained are collected on an alveolate grid (7) held at the surface of the cryogenic bath, this latter having a density less than that of said substance, then the frozen globules (4, 5) formed from the drops are sifted on at least one sieve (14, 15) immersed in the bath below said alveolate grid.

2. The method according to claim 1, characterized by the fact that the cryogenic liquid bath is formed by liquid nitrogen or any other liquidied gas.

3. The method according to one of claims 1 or 2, characterized by the fact that the jet is produced from a reserve (9) having a calibrated orifice (12) whose diameter depends on the dimension of the globules to be obtained.

4. The method according to any one of claims 1 to 3, characterized by the fact that the jet is sprayed by means of a pneumatic nozzle (11) and that the cryogenic bath is set in rotation so as to avoid agglomeration of the drops to be frozen.

5. The method according to any one of claims 1 to 4, characterized by the fact that the substance to be frozen is formed by an organic and/or mineral solution which may contain colloidal substances in suspension or else by an emulsion of two immiscible phases.

6. The method according to any one of claims 1 to 5, characterized by the fact the film polymerized in situ is formed by 2,2-paracyclophane.

**Patentansprüche**

1. Verfahren zur Herstellung von Kügelchen, die dazu bestimmt sind, nachfolgend mittels eines polymerisierten Häutchens eingekapselt zu werden, namentlich zur Herstellung von Substraten für die Zucht insektenfressender Insekten, als künstliche Lepidopter-Eier, in welchem Tropfen (3) vor ihrer Einkapselung in einem Bad von Tiefsttemperaturflüssigkeit (1) eingefroren werden, wobei die Tropfen durch Zerstäubung aus einem Strahl (10) der einzufrierenden Substanz gebildet werden, dadurch

gekennzeichnet, dass die Substanz durch Zersetzung des Strahles (10) zerstäubt wird und die derart erhaltenen Tropfen auf einem an der Oberfläche des Tiefsttemperaturbades angeordneten, wabenförmigen Gitter (7) eingesammelt werden, wobei das Bad eine niedrigere spezifische Masse als die Substanz aufweist, und dass die eingefrorenen, aus den Tropfen herrührenden Kügelchen (4, 5) dann auf mindestens einem im Bad unterhalb des wabenförmigen Gitters getauchten Sieb (14, 15) durchgesiebt werden.

2. Verfahren nach Anspruch 1, dadurch gekennzeichnet, dass das Bad von Tiefsttemperaturflüssigkeit aus Flüssigem Stickstoff oder irgendeinem anderen verflüssigten Gas besteht.

3. Verfahren nach einem der Ansprüche 1 oder 2, dadurch gekennzeichnet, dass der Strahl aus einem Vorrat (9) mit einer kalibrierten Öffnung (12) herkommt, deren Durchmesser von der Grösse der zu erhaltenden Kügelchen abhängt.

4. Verfahren nach irgendeinem der Ansprüche 1 bis 3, dadurch gekennzeichnet, dass der Strahl mittels einer Luftdüse (11) zerstäubt wird, und dass das Tiefsttemperaturbad zur Vermeidung einer Anhäufung der einzufrierenden Tropfen in Drehung versetzt wird.

5. Verfahren nach irgendeinem der Ansprüche 1 bis 4, dadurch gekennzeichnet, dass die einzufrierende Substanz aus einer organischen und/oder mineralischen Lösung, die ungelöste kolloidale Stoffe enthalten kann, oder aus einer Emulsion von zwei unmischbaren Phasen, besteht.

6. Verfahren nach irgendeinem der Ansprüche 1 bis 5, dadurch gekennzeichnet, dass das an Ort polymerisierte Häutchen aus 2,2-Paracyclophan besteht.

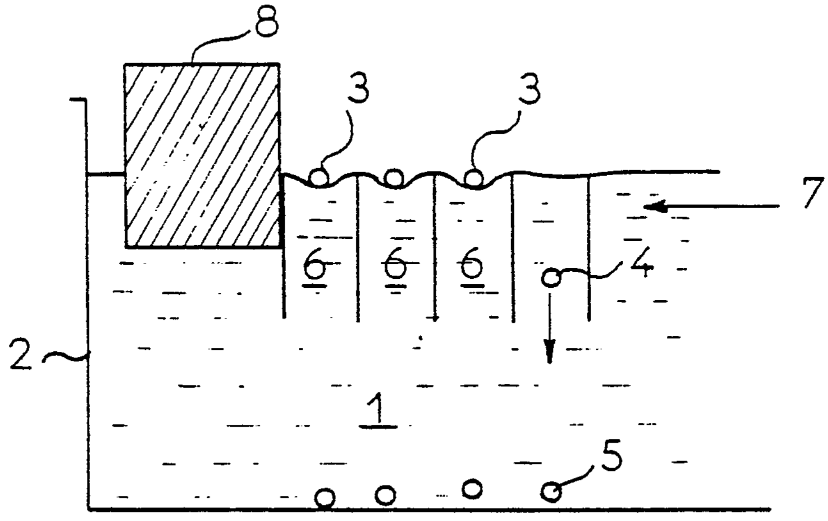


Fig.1

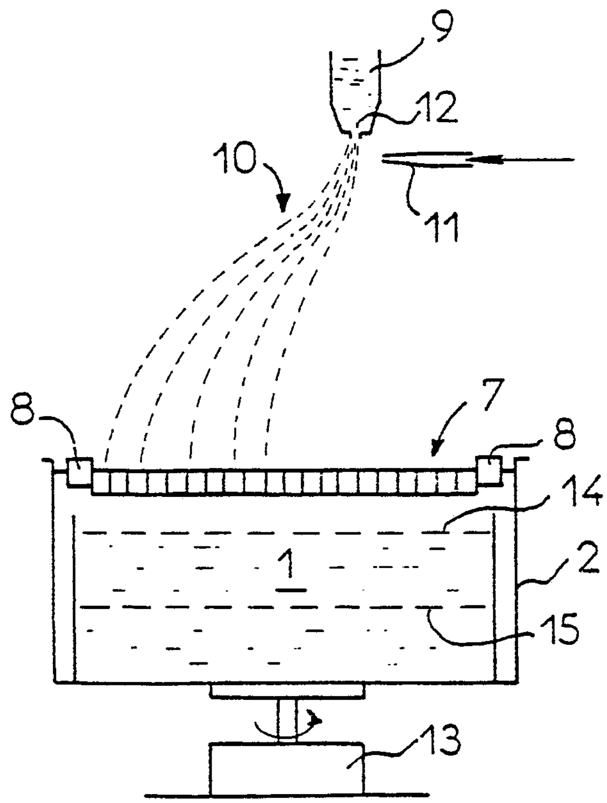


Fig.2